# EUROPÄISCHE PATENTSCHRIFT

(11) **EP 2 307 745 B1**
(45) Veröffentlichungstag und Bekanntmachung des Hinweises auf die Patenterteilung: **01.05.2013**
(21) Anmeldenummer: 09776844.4
(22) Anmeldetag: 26.06.2009
(51) Int. Cl.: F16C 19/34, F16C 19/38, F16C 19/54, F16C 33/61

(54) **ROLLENLAGER, INSBESONDERE MITTENFREIES GROSSWÄLZLAGER**
ROLLER BEARING, PARTICULARLY LARGE-DIAMETER ROLLING BEARING WITH FREE CENTER
PALIER À ROULEAUX, NOTAMMENT PALIER À ROULEAUX DE GRANDES DIMENSIONS À CENTRE LIBRE

(30) Priorität: 25.07.2008 DE 102008035003
(43) Veröffentlichungstag der Anmeldung: 13.04.2011
(73) Patentinhaber: Rothe Erde GmbH, 44137 Dortmund (DE)
(72) Erfinder: CLAUS, Wolfgang, 59510 Lippetal (DE); VAN DER WAL, Mario, 59329 Wadersloh (DE)
(74) Vertreter: Kirchner, Sven
(86) Internationale Anmeldenummer: PCT/EP2009/004612
(87) Internationale Veröffentlichungsnummer: WO 2010/009793

(56) Entgegenhaltungen:
- WO-A-2008/074322
- DE-A1-102006 054 453
- DE-A1-102006 056 186
- DE-U- 1 879 514
- GB-A- 969 883

## Beschreibung

Die Erfindung bezieht sich auf ein Rollenlager, insbesondere mittenfreies Großwälzlager gemäß Patentanspruch 1.

Bei Großwälzlagern, die einen Durchmesser von mehreren Metern bis hin zu 15 Metern haben können, kann es bei bestimmten Belastungen zu einer radialen Relativbewegung zwischen Außenring und Innenring in der Weise kommen, dass es zu einem Ablösen oder Auseinanderklaffen der Ringe kommt.

Aus der DE 10 2006 056 186 A1 ist dazu ein Rollenlager, insbesondere mittenfreies Großwälzlager mit Innenring, Außenring und Nasenring bekannt, wobei vorgeschlagen wird, dass zwischen Innenring und Nasenring des Außenringes ein zusätzliches Wälzlager mit diagonalen Halterollen angeordnet ist, um ein Ablösen der Ringe in radialer Richtung zu verhindern. Mit diesem zusätzlichen Wälzlager mit diagonalen Halterollen wird dabei eine zusätzliche Aufnahme von Radiallasten ermöglicht. Die Aufnahme der radialen Lasten ist dabei aber begrenzt.

Ein weiteres Rollenlager ist in der DE 10 2006 054 453 A1 beschrieben, wobei am freien radial äußeren Ende des Innenringes ein sich in axialer Richtung erstreckender und dem Außenring zugewandter Vorsprung angeordnet ist und zwischen dem Vorsprung und dem Nasenring ein zusätzliches Wälzlager mit Radialrollen angeordnet ist. Insgesamt sind dabei also 4 Rollenlager unabhängig voneinander und mit Abstand zueinander positioniert, wobei jeweils gegenüberliegend 2 Rollenlager mit axial verlaufender und 2 mit radial verlaufender Drehachse vorhanden sind. Die Konstruktion erfordert es dabei, dass für den Zusammenbau sowohl der Innenring zweigeteilt ist als auch der Nasenring aus einem eigenen Ring besteht und mit dem Außenring verschraubt ist. Diese Konstruktion ist relativ kompliziert und enthält relativ viele zu bearbeitende Flächen.

Des Weiteren ist aus der WO 2008/074322 A2 ein Wälzlager zur Anbindung von Rotorblättern an den Rotor bei einer Windkraftanlage bekannt. Hier wird ein im Aufbau - im Vergleich zu aus dem Stand der Technik bekannten Lagern mit zumindest zwei Axiallagern und einem Radiallager - vereinfachtes Wälzlager vorgeschlagen. Anstelle der insgesamt drei Lager beim Stand der Technik werden gemäß der WO 2008/074322 A2 nur noch insgesamt zwei Lager eingesetzt, wobei jedes der beiden Lager als kombiniertes Radial-Axiallager ausgebildet ist und die beiden Lager gegenüberliegend zwischen den Axialbahnen von Innenring und Außenring angeordnet sind.

Der Erfindung liegt die Aufgabe zu Grunde, eine Konstruktion des Rollenlagers vorzuschlagen, bei der weniger Flächen bearbeitet werden müssen und auch bei extrem großen Durchmessern des Großwälzlagers eine Ablösung zwischen den Ringen dauerhaft verhindert wird.

Die Lösung dieser Aufgabe ist im Anspruch 1 angegeben, wobei durch die Verwendung eines kombinierten Radial-Axialrollenlagers mit Axial- und Radialrollen eine einfache Sicherung gegenüber Ablösen erreicht wird.

Die Unteransprüche 2 - 8 enthalten sinnvolle ergänzende Ausführungsformen.

Im Gegensatz zum Stand der Technik wird der Nasenring von insgesamt 3 Rollenlagern umschlossen. Das vereinfacht insbesondere die Montage, wobei Innenring oder Außenring mit dem Nasenring einteilig ausgeführt werden können und für die Montage jeweils nur Haltering und Tragring durch eine Schraubverbindung miteinander verbunden werden. Ebenso ist erfindungsgemäß kein alles umschließender u-förmiger Ring vorhanden. Bei der Fertigung können die beiden Radialbahnen, d.h. die Radialbahn vom Radiallager und die Radialbahn vom kombinierten Radial-Axiallager und die Axialbahnen ,d.h. die Axialbahn vom Axiallager und die Axialbahn vom kombinierten Radial-Axiallager, jeweils in einer Aufspannung auf der Bearbeitungsmaschine bearbeitet werden. Das kombinierte Radial-Axialrollenlager des erfindungsgemäßen Rollenlagers ist derart ausgeführt, dass der Schwerpunkt der Lagerung (tragende Funktion) durch die axiale Lagerung realisiert wird und durch die radialen Lagerkomponenten vorrangig eine Haltefunktion ausgeübt wird. Das kann dadurch realisiert werden, dass das Verhältnis von radialen Rollen zu axialen Rollen beim kombinierten Radial-Axiallager 1:1 beträgt oder geringer als 1:1 bemessen ist. In einer bevorzugten Ausführungsform könnte in Umfangsrichtung auf eine radiale Rolle unmittelbar eine axiale Rolle und auf eine axiale Rolle unmittelbar eine radiale Rolle folgen. In einer noch weiter in Richtung Haltefunktion orientierten Ausführung des kombinierten Radial-Axialrollenlagers könnte das Verhältnis von radialen Rollen zu axialen Rollen kleiner 1:1 - insbesondere kleiner oder gleich 1:3 bemessen sein, wobei auf eine (insbesondere stets gleiche) Anzahl radialer Rollen jeweils eine größere (ebenfalls bevorzugt stets gleiche) Anzahl axialer Rollen folgt. Das erspart erhebliche Kosten und sorgt für eine höhere Fertigungsgenauigkeit. Durch den Verzicht auf die zusätzliche Radialbahn (vgl. DE 10 2006 054 453 A1) und durch die Verwendung einer kombinierten Halte- und Radialbahn enthält das erfindungsgemäße Rollenlager nur 3 Laufbahnen.

Das erfindungsgemäße Rollenlager kann mit vorzugsweise induktiv gehärteten Laufbahnen oder mit Laufdrähten oder insbesondere im großen Durchmesserbereich auch mit Plattenlagern eingesetzt werden.

Auf Grund der kompakten Bauweise kann das erfindungsgemäße Rollenlager auch am Innenring mit einer Innenverzahnung ausgestattet werden, ohne dass ein zusätzlicher Zahnring aufgeschraubt werden muss. Diese Verzahnung kann z. B. bei Lagern mit einem Durchmesser von weniger als 8 Metern direkt am Innenring angebracht werden. Es ist grundsätzlich möglich, je nach Bedarf den Nasenring am Innen- oder Außenring anzuordnen.

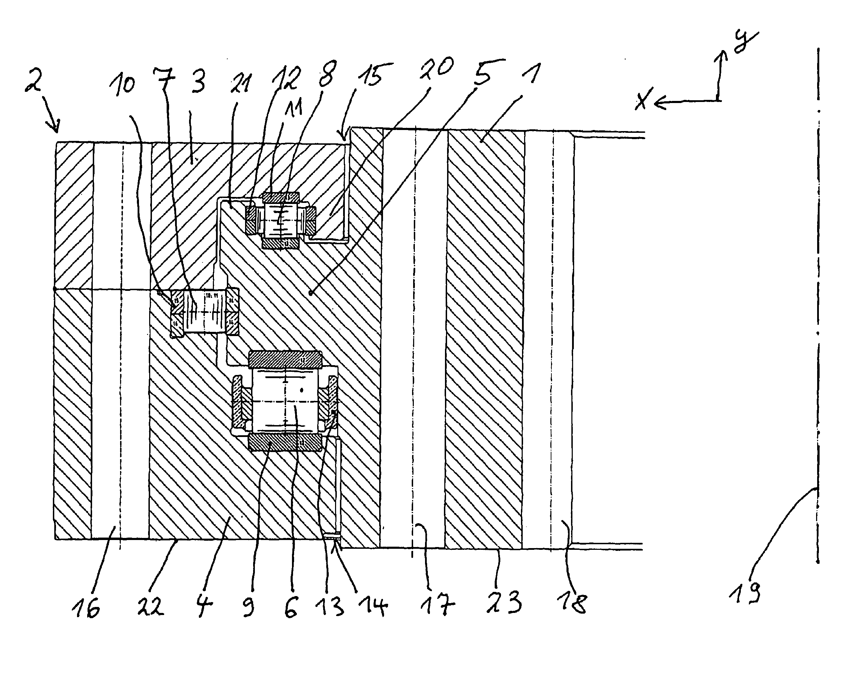

Die Erfindung wird anhand der beigefügten Figur beispielsweise näher erläutert. Diese Figur zeigt einen Querschnitt, der Lagerringe, wobei am einteilig dargestellten Innenring 1 radial nach außen gerichtet der Nasenring 5 angeordnet ist. Der Außenring 2 ist zweigeteilt ausgeführt und besteht aus dem Haltering 3 und dem Tragring 4. Zwischen Tragring 4 und Nasenring 5 befindet sich das mit Tragrollen versehene Axialrollenlager 6 mit radial (x) verlaufender Drehachse der Rollen. Dieses Axialrollenlager 6 ist seitlich mit Führungen 13 zwischen Innenring 1 und Tragring 4 geführt. Zwischen dem radial äußeren Umfang des Nasenringes 5 und dem radial inneren Durchmesser des Tragringes 4 und/oder des Halteringes 3 befindet sich das Radialrollenlager 7. Dieses Radialrollenlager besitzt axial (y) verlaufende Drehachsen der Rollen. Dem Axialrollenlager 6 gegenüberliegend befindet sich zwischen dem Haltering 3 und dem Nasenring 5 das kombinierte Radial-Axialrollenlager, bei dem in Umfangsrichtung abwechselnd Rollen mit axialen und radialen Drehachsen angeordnet sind. Die Axialrollen mit in radialer Richtung verlaufender Drehachse (x) wälzen sich auf Laufdrähten 11 ab, die in den entsprechenden Aussparungen von Haltering 3 und Nasenring 5 gelagert sind. Zu den Radialrollen mit in axialer Richtung verlaufender Drehachse (y) gehören die Laufdrähte 12, die in entsprechenden Aussparungen der Vorsprünge 20 und 21 gelagert sind. Ebenso gehören die Laufdrähte 9 und 10 zum Axialrollenlager 6 bzw. Radialrollenlager 7. Anstelle der Laufdrähte 9 - 12 können bei Wälzlagern mit extrem großen Durchmessern von z. B. mehr als 8 Metern die Laufdrähte 9 - 12 auch aus Plattensegmenten bestehen. Darüber hinaus kann man aber auch ganz auf die Laufdrähte oder Plattensegmente verzichten, stattdessen können die Rollen direkt auf randschichtgehärteten Laufbahnen der Ringe gelagert sein.

In der Figur sind zusätzlich der Dichtungsspalt 14 zur Abdichtung des Tragringes 4 gegenüber dem Innenring 1 nach außen und der Dichtungsspalt 15 zur Abdichtung des Halteringes 3 gegenüber dem Innenring 1 nach außen dargestellt. Die Bohrungen 16 und 17 dienen zur Befestigung des Rollenlagers an den nicht dargestellten Anschlusskonstruktionen. Dabei ist insbesondere auch eine sog. hängende Anordnung möglich ist, wobei an der Anschlussfläche 22 der Tragring 4 auf einer Anschlusskonstruktion aufliegt, während an der Anschlussfläche 23 mit dem sog. hängenden Anschluss die zweite Anschlusskonstruktion befestigt wird. Mit 19 ist die mittlere Drehachse sämtlicher Ringe dargestellt. Die Innenverzahnung 18 ist auf der der Drehachse 19 zugewandten Innenseite des Innenringes 1 angeordnet. Zur Verdeutlichung sind mit den Pfeilen x und y die jeweilige radiale und axiale Richtung dargestellt.

### Bezugszeichenliste:

- 1: Innenring
- 2: Außenring
- 3: Haltering (von 2)
- 4: Tragring (von 2)
- 5: Nasenring (an 1)
- 6: Axialrollenlager (mit radial verlaufender Drehachse der Rollen)
- 7: Radialrollenlager (mit axial verlaufender Drehachse der Rollen)
- 8: Radial-Axialrollenlager (mit axial und radial verlaufenden Drehachsen der Rollen)
- 9: Laufdraht (für 6)
- 10: Laufdraht (für 7)
- 11: Laufdraht (für 8)
- 12: Laufdraht (für 8)
- 13: Führung (für 6)
- 14: Dichtungsspalt (zwischen 1 und 4)
- 15: Dichtungsspalt (zwischen 1 und 3)
- 16: Bohrung (in 3 und 4)
- 17: Bohrung (in 1)
- 18: Innenverzahnung (an 1)
- 19: Drehachse (von 1, 3, 4)
- 20: Vorsprung (an 3)
- 21: Vorsprung (an 5)
- 22: Anschlussfläche (Auflager)
- 23: Anschlussfläche (hängender Anschluss)
- x: radiale Richtung
- y: axiale Richtung

## Patentansprüche

1. Rollenlager insbesondere mittenfreies Großwälzlager, bestehend aus
- einem Innenring (1) und einem geteilten, aus Haltering (3) und Tragring (4) zusammengesetzten Außenring (2) oder einem Außenring und einem geteilten aus Haltering und Tragring zusammengesetzten Innenring,
- zwischen ihnen angeordneten, auf Laufbahnen und/oder Laufdrähten (9 - 12) oder Laufplatten abwälzenden Wälzkörpern und
- einem am Innenring (1) angeordneten sich radial (x) nach außen erstreckenden oder am Außenring (2) sich radial (x) nach innen erstreckenden Nasenring (5), der gegenüber dem Haltering (3) und dem Tragring (4) mit Rollenlagern in axialer (y) und radialer (x) Richtung abgestützt ist, wobei
- zwischen Tragring (4) oder Haltering (3) und Nasenring (5) ein Axialrollenlager (6) mit radial verlaufender Drehachse,
- zwischen Tragring (4) und/oder Haltering (3) und Nasenring (5) mindestens ein Radialrollenlager (7) mit axial verlaufender Drehachse und
- zwischen Haltering (3) oder Tragring (4) und Nasenring (5) ein kombiniertes Radial-Axialrollenlager (8) angeordnet ist, bei dem die Rollen abwechselnd axial und radial verlaufende Drehachsen besitzen.

2. Rollenlager nach Anspruch 1, **dadurch gekennzeichnet, dass** das Verhältnis von radialen Rollen zu axialen Rollen 1:1 beträgt, wobei in Umfangsrichtung auf eine radiale Rolle unmittelbar eine axiale Rolle und auf eine axiale Rolle eine radiale Rolle folgt.

3. Rollenlager nach Anspruch 1, **dadurch gekennzeichnet, dass** das Verhältnis von radialen Rollen zu axialen Rollen kleiner 1: 1 bemessen ist, wobei in Umfangsrichtung auf eine Anzahl radialer Rollen jeweils eine größere Anzahl axialer Rollen folgt.

4. Rollenlager nach einem der vorstehenden Ansprüche, **dadurch gekennzeichnet, dass** am radial äußeren freien Ende des Nasenringes (5) ein sich in axialer Richtung (y) erstreckender dem Haltering (3) oder Tragring (4) zugewandter Vorsprung (21) und am radial inneren freien Ende des Halteringes (3) oder Tragringes (4) ein sich ebenfalls in axialer Richtung (y) erstreckender dem Nasenring (5) zugewandter Vorsprung (20) angeordnet sind und an diesen entgegengesetzt gerichteten Vorsprüngen (20, 21) sich die Rollen mit axialer Drehachse des Radial-Axialrollenlagers (8) abstützen.

5. Rollenlager nach Anspruch 4, **dadurch gekennzeichnet, dass** die Vorsprünge (20, 21) derart ausgeführt sind, dass sie unter Einschluss des Radial-Axialrollenlagers (8) überlappend ineinandergreifen.

6. Rollenlager nach einem der vorstehenden Ansprüche, **dadurch gekennzeichnet, dass** die Rollen auf randschichtgehärteten Laufbahnen abwälzen.

7. Rollenlager nach einem der vorstehenden Ansprüche, **dadurch gekennzeichnet, dass** Innenring (1) und/oder Außenring (2) zweigeteilt ausgeführt sind, wobei die Trennlinie in radialer Richtung (x) verläuft

8. Rollenlager nach einem der vorhergehenden Anspruche, **dadurch gekennzeichnet, dass** am Innenring (1) eine nach innen gerichtete Innenverzahnung (18) angeordnet ist.

## Claims

1. Roller bearing, in particular, centre-free large-diameter anti-friction bearing, consisting of
- an inner ring (1) and a divided outer ring (2), composed of a holding ring (3) and support ring (4), or an outer ring and a divided inner ring, composed of a holding ring and support ring,
- roll bodies disposed between them, rolling on races and/or wire races (9 - 12) or plate races and
- a lug ring (5) disposed on the inner ring (1), extending radially (x) outwards or on the outer ring (2) extending radially (x) inwards, which lug ring is supported with respect to the holding ring (3) and the support ring (4) with roller bearings in the axial (y) and radial (x) direction, wherein
- between the support ring (4) or holding ring (3) and lug ring (5) an axial roller bearing (6) with a radially extending axis of rotation,
- between the support ring (4) and/or holding ring (3) and lug ring (5) at least one radial roller bearing (7) with an axially extending axis of rotation and
- between the holding ring (3) or support ring (4) and lug ring (5) a combined radial-axial roller bearing (8) is disposed, in which the rollers in an alternating manner have axially and radially extending axes of rotation.

2. Roller bearing as claimed in claim 1, **characterised in that** the ratio of radial rollers to axial rollers is 1:1, wherein in the peripheral direction a radial roller is immediately followed by an axial roller and an axial roller is followed by a radial roller.

3. Roller bearing as claimed in claim 1, **characterised in that** the ratio of radial rollers to axial rollers is less than 1:1, wherein in the peripheral direction a number of radial rollers is followed in each case by a larger number of axial rollers.

4. Roller bearing as claimed in any one of the preceding claims, **characterised in that** at the radially outer free end of the lug ring (5) a protrusion (21) extending in the axial direction (y) and facing the holding ring (3) or support ring (4) is disposed, and at the radially inner free end of the holding ring (3) or support ring (4) a protrusion (20) also extending in the axial direction (y) and facing the lug ring (5) is disposed, and the rollers with an axial axis of rotation of the radial-axial roller bearing (8) are supported on these oppositely directed protrusions (20, 21).

5. Roller bearing as claimed in claim 4, **characterised in that** the protrusions (20, 21) are formed in such a way that they engage into one another in an overlapping manner, enclosing the radial-axial roller bearing (8).

6. Roller bearing as claimed in any one of the preceding claims, **characterised in that** the rollers roll on surface-layer-hardened races.

7. Roller bearing as claimed in any one of the preceding claims, **characterised in that** the inner ring (1) and/or outer ring (2) are split, wherein the line of separation extends in the radial direction (x).

8. Roller bearing as claimed in any one of the preceding claims, **characterised in that** inwardly directed inner toothing (18) is disposed on the inner ring (1).

## Revendications

1. Palier à rouleaux, en particulier palier à rouleaux de grandes dimensions à centre libre, qui comprend
- une bague intérieure (1) et une bague extérieure (2) divisée, composée d'une bague de retenue (3) et d'une bague de support (4), ou une bague extérieure et une bague intérieure divisée, composée d'une bague de retenue et d'une bague de support,
- des corps de roulement, qui, agencés entre les bagues, tournent sur des pistes de roulement et / ou sur des fils de roulement (9 - 12) ou des plaques de roulement, et
- une bague à talon (5), qui, agencée sur la bague intérieure (1) et s'étendant vers l'extérieur dans la direction radiale (x) ou agencée sur la bague extérieure (2) et s'étendant vers l'intérieur dans la direction radiale (x), est soutenue par des paliers à rouleaux, dans la direction axiale (y) et dans la direction radiale (x), par rapport à la bague de retenue (3) et à la bague de support (4),
sachant que sont agencés,
- entre la bague de support (4) ou la bague de retenue (3) et la bague à talon (5), un palier à rouleaux axial (6) avec axe de rotation s'étendant radialement,
- entre la bague de support (4) et / ou la bague de retenue (3) et la bague à talon (5), au moins un palier à rouleaux radial (7) avec axe de rotation s'étendant axialement,
- entre la bague de retenue (3) ou la bague de support (4) et la bague à talon (5), un palier à rouleaux combiné axial-radial (8), dans lequel les rouleaux sont dotés d'axe de rotation s'étendant alternativement axialement et radialement.

2. Palier à rouleaux selon la revendication 1, **caractérisé en ce que** le rapport entre les rouleaux radiaux et les rouleaux axiaux est de 1 : 1, sachant que, dans la direction périphérique, à un rouleau radial fait directement suite un rouleau axial et à un rouleau axial fait suite un rouleau radial.

3. Palier à rouleaux selon la revendication 1, **caractérisé en ce que** le rapport entre les rouleaux radiaux et les rouleaux axiaux est inférieur à 1 : 1, sachant que, dans la direction périphérique, à un nombre de rouleaux radiaux fait chaque fois suite un plus grand nombre de rouleaux axiaux.

4. Palier à rouleaux selon l'une des revendications précédentes, **caractérisé en ce que**, à l'extrémité radialement extérieure de la bague à talon (5) est agencée une saillie (21), qui, s'étendant dans la direction axiale (y), est orientée vers la bague de retenue (3) ou vers la bague de support (4), et à l'extrémité libre, intérieure, radiale de la bague de maintien (3) ou de la bague de support (4), est agencée une saillie (20), qui, s'étendant également dans la direction axiale (y), est orientée vers la bague à talon (5), et que les rouleaux à axe de rotation axial du palier à rouleaux radial-axial (8) prennent appui sur ces deux saillies (20, 21) opposées,

5. Palier à rouleaux selon la revendication 4, **caractérisé en ce que** les saillies (20, 21) sont réalisées de sorte qu'elles s'engagent l'une dans l'autre avec chevauchement, en entourant le palier à rouleau radial-axial (8).

6. Palier à rouleaux selon l'une des revendications précédentes, **caractérisé en ce que** les rouleaux tournent sur des pistes de roulement durcies superficiellement en périphérie.

7. Palier à rouleaux selon l'une des revendications précédentes, **caractérisé en ce que** la bague intérieure (1) et / ou la bague extérieure (2) sont divisées en deux, sachant que la ligne de séparation s'étend dans la direction radiale (x).

8. Palier à rouleaux selon l' une des revendications précédentes, **caractérisé en ce que**, dans la bague intérieure (1), est ordonnée une denture intérieure (18).
